# EUROPEAN PATENT APPLICATION

(11) **EP 1 842 865 A2**
(43) Date of publication of application: **10.10.2007**
(21) Application number: 07005988.6
(22) Date of filing: 23.03.2007
(51) Int. Cl.: C08G 18/32, C08G 18/48, C08G 18/50, C08G 18/66, C08G 18/76, C09D 175/08

(54) **Composite parts comprising sprayed polyurethaneureas**

(30) Priority: 05.04.2006 US 398109
(71) Applicant: Bayer MaterialScience LLC, Pittsburgh PA 15205 (US)
(72) Inventor: Rosthauer, James W., Pittsburgh, PA 15205-1734 (US)
(74) Representative: Klimiuk, Meike

(57) **Abstract**

This invention relates to composite articles comprising an unsaturated polyester gel coat, at least one sprayable polyurethaneurea layer, and an unsaturated polyester resin layer containing chopped glass fibers. The present invention also relates to a process for the production of these composite articles.

## Description

### BACKGROUND OF THE INVENTION

The present invention relates to composite parts comprising sprayed polyurethaneureas and to a process for their production.

Fiber reinforced composite articles having an aesthetic visual surface are suitable for use as pleasure craft hulls, personal watercraft, sea plan pontoons, hot tubs, swimming pools and other items used in aqueous environments. Various watercraft hulls and fiberglass reinforced articles have been made through a multi-step process for a number of years.

The process requires a female mold that is created with a surface of the class desired for the article. For watercraft hulls, it is generally quite smooth and shiny. The mold is coated with a release coating and a relatively thick "gel coat" is sprayed onto the mold surface. Typically, the gel coat is pigmented to the desired final color of the article, and is generally devoid of fibrous reinforcement. After application of the gel coat, a fiberglass composite body is constructed, which typically consists of several layers. The majority of the reinforcement comprises glass fibers, in the form of chopped fibers, felted mat, woven cloth, unidirectional tape, etc. The fibers such as polyaramid, carbon and high density polyolefin may also be used in portions of the hull which experience greater amounts of stress or loads.

Typical structural lay-ups comprise a layer of curable polyester applied over the gel coat, followed by a layer of fiberglass mat. Often the polyester contains chopped fiberglass which must be compacted into this initial polyester layer (skin coat or backer layer). Both the chopped fiberglass and the fiberglass mat layers are generally hand-rolled to insure complete wet-out and to eliminate trapped air bubbles. Additional resin and mat are applied and the steps repeated, followed by spraying a mixture of chopped fiberglass and resin. The last layer is usually neat resin to provide adequate surface appearance and cover all exposed fibers. Once the composite lay-up is cured, it is demolded. This method makes it possible to prepare boat hulls of varying thicknesses.

U.S. Patent 4,543,366 discloses sprayable urethane resin compositions and a process for preparing these sprayable resin compositions. These urethane resins may be used alone to form a gel coat without fillers, or they may be sprayed over unsaturated polyester cured gel coats. These urethane resins comprise an A-side comprising diphenylmethane diisocyanate or a prepolymer thereof, and a B-side comprising an auto catalytic polyol (typically an aromatic amine polyol having an OH number of less than 600) and a viscosity reducing amount of tetraethylene glycol both as a reactive polyol and as a viscosity reducer, and a catalyst to effect the quick reaction and cure on the admixture of the A and B mixtures. Chopped glass maybe used as a reinforcing fiber.

U.S. Patent 5,614,575 discloses sprayable urethane resin compositions and a process for the preparation of fiber reinforced polyurethanes using a spraying technique. The polyol component of the urethane resin comprises a polyether polyol amine, a nitrogen-free hydroxy-terminated polyether and a sucrose initiated polyether polyol. Fibers may be fed to a chopper unit attached to a spray gun, thereby cutting the fibers to suitable lengths and spraying them onto the mold surface along with the polyurethane resin. Thus, this reference discloses the preparation of fiber-reinforced polyurethane resins by a spray technique. These are suitable alternatives for the previously known fiber-reinforced plastics.

Curable compositions containing unsaturated polyester and isocyanate prepolymer, and a process for the production of gel coated, shaped-articles using these compositions are disclosed in U.S. Patents 5,904,986 and 5,936,034. The process comprises a) applying onto the surface of a mold, a gel-coat layer of an unsaturated polyester resin system, b) applying onto the gel-coat layer after 5 to 7 mins. a backer layer, c) applying onto the backer layer after 5 to 8 mins. a layer consisting of a polyurethane system optionally mixed with reinforcement materials, and d) curing the resultant composite. The backer-layer in b) consists essentially of i) 50 to 75% by wt. of an unsaturated polyester resin, ii) 3 to 25% by wt. of a quasi-prepolymer having an NCO group content of 16 to 27%, iii) 0.5 to 5% by wt. of a curing system consisting essentially of (A) a catalyst for the unsaturated polyester resin, (B) at least one accelerator for the polyester resins, and (C) optionally, an isocyanate trimerization catalyst, and iv) from 0 to 100% by wt. of additives to regulate thixotropic behavior, or improve strength and reduce shrinkage of the backer layer.

U.S. Patent Application 2005/0075450 discloses two component polyurethane systems which employ highly hydrophobic polyols are capable of producing gel coats and fiber reinforced structural composites which exhibit exceptional resistance to impact damage and permeation by water. These systems are essentially emission free during lay-up and cure. Both the gel coats and the matrix resins of this application comprise two component polyurethane systems, preferably with a high proportion of at least one highly hydrophobic polyol. The gel coat is substantially an aliphatic system comprising a hydrophobic aliphatic polyol, optionally a low molecular weight aliphatic crosslinker, and an aliphatic isocyanate prepolymer. The matrix resin is preferably an aromatic isocyanate prepolymer and a hydrophobic polyol which may be less hydrophobic than for the gel coat.

Low VOC (volatile organic compounds), low tack gel coat resins are disclosed in U.S. Patent 6,617,395. These gel coats comprise an unsaturated polyester resin derived from maleic anhydride and up to about 30% by weight of an organic solvent. This process comprises (A) forming a first reaction mixture comprising a dicarboxylic acid and at least one polyol, (B) reacting the first reaction mixture to form a first reaction product, (C) forming a second reaction mixture comprising the first reaction product and further reactant monomers comprising maleic anhydride and a monocarboxylic acid, and (D) reaction the second reaction mixture to form a unsaturated polyester resin. This unsaturated polyester resin is characterized by (a) a high shear viscosity (at least 500 sec⁻¹) in styrene solution, (b) a glass transition temperature greater than or equal to 11°C, and (c) a weight average molecular weight of less than or equal to 6,050.

A process for preparing unsaturated polyester resins is described in U.S. Patent 6,107,446. This process comprises reacting at least one carboxylic acid or the corresponding anhydride containing ethylenic unsaturation with at least one low molecular weight, saturated monohydric alcohol, to form the half ester. This half ester is then reacted with at least one polyhydric alcohol in a condensation reaction, to yield a final product having a low acid value. The resultant resins have acid values below 50 mg KOH/g and are more soluble in styrene than comparable resins prepared using standard ester resin synthesis processes in which a carboxylic acid and polyol are reacted without first reacting the acid with a saturated monohydric alcohol.

Copending U.S. Application Serial Number 10/957,993, which was filed on October 4, 2004, and is commonly assigned, discloses polyester-polyurethane composites. These composites comprise a polyester matrix which contains unsaturation and a polyurethane matrix. These composites are described as exhibiting improved adhesion when the polyurethane matrix comprises at least one polyether which contains both hydroxyl-functionality and unsaturation-functionality.

U.S. Patent 5,543,225 describes multilayer fiber reinforced polymeric shaped articles and a method for their manufacture. The top layer comprises a thermoset polyester resin and a supporting layer comprising a fiber reinforced, thermoset high density polyurethane foam. More than one supporting layer of the polyurethane foam may be present.

Gel coat compositions for an in-mold finish process and composite articles prepared from these are described in WO 2004/013236 A2. The composite articles comprise a gel coat layer, a laminate layer, and preferably, a barrier layer disposed between the gel coat and the laminate. Suitable laminates contain from 20 to 60% by weight of reinforcing fibers and may comprise a low shrink, low density glass fiber filled polyester resin.

U.S. Patent 6,632,875 and U.S. Patent 6,821,059 described geotextiles which are impregnated with a polyurethane-forming reaction mixture which has an adjustable mix viscosity. The viscosity of the reaction mixture is adjusted by the adding of a diamine, polyamine, and/or amine-terminated polyol prior to application of the reaction mixture to the geotextile. As described in U.S. 6,821,059, these reaction mixtures are sprayed onto the geotextile to impregnate it.

Advantages of the present invention include improved adhesion between the interface of the polyurethane layer and the polyester gel coat. The interface is also free from voids which are often the result of hand rolling the fiber reinforced skin coat that is normally applied directly onto the gel coat surface. The polyurethaneurea skin coat does not require hand rolling when incorporating glass fibers. The polyurethaneurea skin coat also does not sag or run when applied onto vertical surfaces. The optional use of a filler in the polyurethaneurea layer may also eliminate the need for more expensive hollow spheres in order to dissipate heat evolved from curing thick sections of FRP (fiber-reinforced plastic or fiber-reinforced polymer). Adhesion of the subsequent layers of laminate to the polyurethaneurea layer is excellent.

### SUMMARY OF THE INVENTION

This invention relates to composite parts comprising sprayed polyurethaneureas and to a process for the production of these composite parts.

The composite parts of the present invention comprise:
(A) an unsaturated polyester gel coat;
(B) at least one sprayable polyurethaneurea layer and
(C) an unsaturated polyester resin layer which contains chopped glass fibers.

The sprayable polyurethaneurea layer (B) comprises the reaction product of:
(1) at least one polyisocyanate component,
   with
(2) an isocyanate-reactive component comprising:
   (a) no more than 20% by weight of at least one high molecular weight polyether polyol having a functionality of 1.8 to 3.5 and a molecular weight of about 1,500 to about 8,000;
   (b) from about 70 to about 95% by weight of at least one crosslinking agent having a functionality of 2.5 to 8 and a molecular weight of 200 to less than 1,500;
      and
   (c) from about 0.5 to about 10% by weight of at least one chain extender having a functionality of about 2 and a molecular weight of about 60 to about 250;
   with the sum of the %'s by weight of (a), (b) and (c) totaling 100% by weight of (2) the isocyanate-reactive component.

The present invention also relates to a process for the production of these composites. This process comprises:
(I) applying (A) an unsaturated polyester gel coat to a suitable substrate;
(II) spraying (B) at least one layer of a polyurethaneurea onto the gel coat formed in (I);
   and
(III) applying C) an unsaturated polyester resin layer containing chopped glass fibers onto the polyurethaneurea layer formed in (II).

The polyurethaneurea which is sprayed on in step (II) of this process comprises the above described reaction product of (1) at least one polyisocyanate component and (2) at least one isocyanate-reactive component.

### DETAILED DESCRIPTION OF THE INVENTION

As used herein, the term skin coat refers to the layer which is in direct contact with the gel coat. The terms barrier coat and/or backer layer have the same meaning as skin coat, and thus, may be used interchangeably with skin coat.

In accordance with the present invention, suitable materials to be used as component (A) the unsaturated polyester gel coat include, for example, those formed by polycondensing at least a diol component with at least a polycarboxylic component and containing a reactive curing monomer. Such unsaturated polyester gel coats are described in, for example, U.S. Patents 5,904,986 and 5,936,034, the disclosures of which are hereby incorporated by reference. They include all conventional unsaturated polyester resins such as those which comprise the reaction product of a di- or polycarboxylic acid and/or anhydrides therefrom, and a di- or poly-alcohol, and which contains ethylenic unsaturation. The ethylenic unsaturation may be provided by the polycarboxylic acid itself, or may result from the inclusion into the polyester of one or more copolymerizable compounds having ethylenic unsaturation.

General information relevant to polyester resins which may be used in preparing resin compositions in accordance with the invention can be found in various literature references such as, for example, the Condensed Chemical Dictionary (10th Ed.), G. D. Hawley (Reviser), Van Nostrand Reinhold (NY), 1981, p 830; Encyclopaedia of Polymer Science and Technology, H. F. Mark, N. G. Gaylord, and N. M. Bikales (Eds.), John Wiley and Sons, NY, 1969, Vol. 11, p 62-168; U.S. Patent 3,396,067; and U.S. Patent 2,255,313, the disclosures of which are hereby incorporated by reference.

These unsaturated polyesters comprise the reaction product of a diol component which can be, for example, a C₂₋₂₀ alkanediol or a C₂₋₂₀ aryldiol such as, for example, ethylene glycol, diethylene glycol, triethylene glycol, polyethylene glycol, propylene glycol, dipropylene glycol, polypropylene glycol, 1,3-butanediol, 1,4-butanediol, neopentyl glycol (NPG), cyclohexanedimethanol, 2,2,4-trimethylpentane-diol, bisphenol A, trimethylolethane, trimethylolpropane, dicyclopentadiene glycol or dibromoneopentyl glycol; with a polycarboxylic acid component which can be, for example, a C₄₋₂₈ alkenyl di-aci, an C₄₋₂₈ aryl di-acid, or an anhydride thereof, such as, for example, maleic anhydride, fumaric acid, phthalic anhydride, isophthalic acid, terephthalic acid, trimellitic anhydride, anhydrides of chlorendic, tetrabromophthalic and tetrachlorophthalic acids, itaconic anhydride, citraconic anhydride, mesaconic anhydride, or aconitic acid. Preferred diols include propylene glycol and neopentyl glycol, and preferred carboxylic acids include orthophthalic anhydride, isophthalic acid, maleic anhydride and phthalic anhydride.

In accordance with the preferred embodiment of this invention, and as described in U.S. Patent 6,617,395, the disclosure of which is hereby incorporated by reference, these unsaturated polyesters are prepared by reacting the dicarboxylic acid and polyol in a first stage at about 200°C for about 7 hours. This first stage is stopped at an acid value of less than about 10 mg KOH/g, and preferably about 8 mg KOH/g. In the second stage, maleic anhydride and the saturated monocarboxylic acid are added and the reaction proceeds for about 10 hours at about 200°C, to an acid value of less than about 10 mg KOH/g.

Since the polyesters which contain ethylenic unsaturation are often too viscous to be applied by spraying, one or more compounds which are copolymerizable with the unsaturated polyesters to the lower viscosity may be included or added. These materials are typically referred to as reactive diluents. Some examples of such reactive diluents include, for example, styrene, α-styrene, vinyltoluene, vinylpyrrolidone, vinylether, vinylester, divinylbenzene and di(meth)acrylic acid esters of diols, such as ethanediol, 1,3-propanediol and 1,4-butanediol. Most preferred are those polyesters containing styrene as reactive diluent. Preferred are those polyesters containing up to 50 wt.%, more preferably from 10 to 50 wt.%, most preferably from 20 to 50 wt.%, based on the weight of the polyester matrix, of these compounds containing unsaturated functionality.

A catalytic system which is useful in the polyester resin system for the crosslinking reaction can be based on organic peroxides. Some examples of suitable organic peroxides include compounds such as methyl ethyl ketone peroxide (MEKP), and accelerators such as cobalt salts and tertiary amines.

The gel coating resin composition of the present invention may optionally contain a metal compound as a cure accelerator. Metal compounds commonly employed as accelerators in unsaturated polyester resins may be used and they include cobalt naphthenate, cobalt 2-ethylhexanoate, divalent acetylacetonatocobalt, trivalent acetylacetonatocobalt, potassium hexanoate, zirconium naphthenate, acetylacetonatozirconium, vanadium naphthenate, vanadium 2 - methylhexanoate, acetylacetonatovanadium, acetylacetonatovanadyl, and acetylacetonatolithium. These compounds may be used either independently or in combination with each other. They may, if desired, be combined with other known accelerators such as amines, phosphorous-containing compounds, and .beta.-diketones.

The amount in which the cure accelerator is added is appropriately adjusted depending upon the desired gel time. Preferably, it is added in 0.0001 to 0.12 parts by weight in terms of the metal component. If the resin composition produced is to be shaped at temperatures at or above 40.degree. C., the use of cure accelerators is optional.

The unsaturated polyester resin system can be prepared by admixing 100 parts by weight (pbw) of a polyester resin containing reactive diluent, 1 to 5 pbw of a catalytic system and 20 to 40 pbw of pigments and additives. The unsaturated polyester resin system is sprayed onto the mold and allowed to cure.

The unsaturated polyester component used as the gel coat may optionally contain one or more pigments and/or dyes. Suitable pigments and/or dyes including, for example, organic and inorganic compounds, may also be present. Suitable inorganic pigments include, for example, oxide pigments such as iron oxides, titanium dioxide, nickel oxides, chromium oxides and cobalt blue and also zinc sulfides, ultramarine, sulfides of the rare earths, bismuth vanadate and also carbon black, which is considered a pigment for the purposes of this invention. Particular carbon blacks are the acidic to alkaline carbon blacks obtained by the gas or furnace process and also chemically surface-modified carbon blacks, for example sulfo- or carboxyl-containing carbon blacks. Suitable organic pigments include, for example, those of the monoazo, disazo, laked azo, β-naphthol, Naphthol AS, benzimidazolone, diazo condensation, azo metal complex, isoindolinone and isoindoline series, also polycyclic pigments for example from the phthalocyanine, quinacridone, perylene, perinone, thioindigo, anthraquinone, dioxazine, quinophthalone and diketopyrrolopyrrole series. Suitable pigments also include solid solutions of the pigments mentioned, mixtures of organic and/or inorganic pigments with organic and/or inorganic pigments such as, for example, carbon black coated metal, mica or talc pigments, for example mica CVD-coated with iron oxide, and also mixtures between the pigments mentioned. Other suitable pigments include laked dyes such as Ca, Mg and Al lakes of sulfo- and/or carboxyl-containing dyes. Also suitable are pigments from the group of the azo metal complex pigments or their tautomeric forms which are known. Other suitable pigments include, for example, metal flake pigments of, for example, aluminum, zinc or magnesium. It is also possible that the metal flake, particularly aluminum flake, could be leafing or non-leafing.

This thermosettable polyester composition may also optionally include flame retardants, surfactants, antioxidants, UV stabilizers, inert fillers such as talc, mica, etc., mold release agents, and other well known processing fillers which give a composition that can be sprayed as a heavy even coat without sagging, pinholing, eyeholing or other processing defects.

The gel coating resin composition of the present invention may further incorporate, as required, various additives such as organic or inorganic thixotropes, stabilizers, defoaming agents, and leveling agents.

Suitable organic and inorganic thixotropes include, for example, silica powders, asbestos powders, hydrogenated castor oil, aliphatic acid amides, and other known thixotropes. These thixotropes may be used either on their own or as admixtures.

By imparting thixotropy, the efficiency of painting operations, film-forming properties and leveling properties can be improved and the occurrence of defects such as discontinuity in gel-coated paint films can be substantially eliminated. As a further advantage, mechanical painting operations such as spraying can be accomplished without using any solvent.

In accordance with the present invention, the gel-coat layer can be applied onto the mold using conventional techniques such as those described in SPI Handbook of Technology and Engineering or Reinforced Plastics/Composites, Van Norstrand Reinhold Company, N.Y. The thickness of the gel-coat layer is typically of from 2 to 50 mils, preferably 10 to 40 mils, and more preferably 15 to 30 mils.

In accordance with the present invention, the polyurethaneurea layer comprises the reaction product of
(1) at least one polyisocyanate component,
   with
(2) an isocyanate-reactive component which comprises:
   (a) no more than 20% by weight, preferably from 5 to 15% by weight, of at least one high molecular weight polyether polyol having a functionality of 1.8 to 3.5 and a molecular weight of 1,500 to 8,000;
   (b) from about 70 to about 95% by weight, preferably from 80 to 90% by weight, of at least one crosslinking agent having a functionality of 2.5 to 8 and a molecular weight of 200 to less than 1,500;
      and
   (c) from about 0.5 to about 10% by weight, preferably from about 2 to about 5% by weight, of at least one chain extender having a functionality of about 2 and a molecular weight of about 60 to about 250;
   with the sum of (a), (b) and (c) totaling 100% by weight of component (2) the isocyanate-reactive component.

Suitable polyisocyanates to be used as component (1) of the polyurethaneurea layer include, for example, include those having an NCO group content of from 15 to 60%, preferably from 18 to 40% by weight, more preferably from 20 to 34% by weight and most preferably from 22 to 33% by weight. The suitable polyisocyanates which may be used in accordance with the present invention include monomeric diisocyanates, liquid polyisocyanates and NCO prepolymers, and preferably polyisocyanate adducts. Suitable monomeric diisocyanates may be represented by the formula R(NCO)₂ in which R represents an organic group obtained by removing the isocyanate groups from an organic diisocyanate having a molecular weight of about 56 to 1,000, preferably about 84 to 400. Diisocyanates preferred for the process according to the invention are those represented by the above formula in which R represents a divalent aliphatic, hydrocarbon group having 4 to 12 carbon atoms, a divalent cyclo-aliphatic hydrocarbon group having 6 to 13 carbon atoms, a divalent araliphatic hydrocarbon group having 7 to 20 carbon atoms or a divalent aromatic hydrocarbon group having 6 to 18 carbon atoms. Preferred monomeric diisocyanates are those wherein R represents an aromatic hydrocarbon group.

Examples of the suitable organic diisocyanates include 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3- and -1,4-diisocyanate, 1-isocyanato-2-isocyanatomethyl cyclopentane, 1-isocyanato-3-isocyanatomethyl-3,5,5-trimethyl-cyclohexane (isophorone diisocyanate or IPDI), bis(4-isocyanatocyclohexyl) methane, 2,4'-dicyclohexylmethane diisocyanate, 1,3- and 1,4-bis(isocyanatomethyl) cyclohexane, bis(4-isocyanato-3-methylcyclohexyl) methane, α,α,α',α'-tetramethyl-1,3- and/or -1,4-xylylene diisocyanate, 1-isocyanato-1-methyl-4(3)-isocyanatomethyl cyclohexane, 2,4- and/or 2,6-hexahydrotoluene diisocyanate, 1,3- and/or 1,4-phenylene diisocyanate, 2,4- and/or 2,6-toluene diisocyanate, 2,4'- and/or 4,4'-diphenylmethane diisocyanate, 1,5-diisocyanato naphthalene and mixtures thereof. Aromatic polyisocyanates containing 3 or more isocyanate groups such as 4,4',4"-triphenylmethane triisocyanate and polymethylene poly(phenylisocyanates) obtained by phosgenating aniline/formaldehyde condensates may also be used.

In accordance with the present invention, at least a portion of the polyisocyanate component may be present in the form of an NCO prepolymer or a polyisocyanate adduct, preferably a polyisocyanate adduct. Suitable polyisocyanate adducts include those containing allophanate and/or carbodiimide groups. The polyisocyanate adducts have an average functionality of 2.0 to 4 and a NCO content of 5 to 48% by weight. Suitable adducts/prepolymers include the following type of components: urethane group-containing polyisocyanates, allophanate group-containing polyisocyanates, and carbodiimide group-containing polyisocyanates.

The NCO prepolymers, which may also be used as the polyisocyanate component in accordance with the present invention, are prepared from the previously described polyisocyanates or polyisocyanate adducts, preferably monomeric diisocyanates, and organic compounds containing at least two isocyanate-reactive groups, preferably at least two hydroxy groups. These organic compounds include high molecular weight compounds having molecular weights of 500 to about 5,000, preferably 800 to about 3,000, and optionally low molecular weight compounds with molecular weights below 400. The molecular weights are number average molecular weights (Mₙ) and are determined by end group analysis (OH number). Products obtained by reacting polyisocyanates exclusively with low molecular weight compounds are polyisocyanate adducts containing urethane groups and are not considered to be NCO prepolymers.

It is preferred that the polyisocyanates of the present invention are aromatic polyisocyanates. Some examples of suitable aromatic poly-isocyanates are 1,3- and/or 1,4-phenylene diisocyanate, 2,4- and/or 2,6-toluene diisocyanate, 2,2'-, 2,4'- and/or 4,4'-diphenylmethane diisocyanate, 1,5-diisocyanato naphthalene and mixtures thereof. Aromatic poly-isocyanates containing 3 or more isocyanate groups such as 4,4',4"-triphenylmethane triisocyanate and polymethylene poly(phenylisocyanates) obtained by phosgenating aniline/formaldehyde condensates may also be used. Isomeric mixtures of diphenylmethane diisocyanates and mixtures of them with polymeric diphenylmethane diisocyanates and urethane adducts thereof are preferred for component (1) in accordance with the present invention.

The isocyanate-reactive component, i.e. component (2), of the polyurethaneurea layer herein comprises:
(a) no more than 20%, preferably 5 to 15% by weight of at least one high molecular weight polyether polyol having a functionality of 1.8 to 3.5 and a molecular weight of 1,500 to 8,000;
(b) from about 70 to about 95%, preferably 80 to 90% by weight of at least one crosslinking agent having a functionality of 2.5 to 8 and a molecular weight of 200 to less than 1,500 and which comprises
   (1) from 20 to 80% by weight of at least one sucrose initiated crosslinking agent,
      and
   (2) from 20 to 80% by weight of at least one amine initiated crosslinking agent,
      with the sum of (1) and (2) totaling 100% by weight of the crosslinking agent (b);
   and
(c) from about 0.5 to about 10%, preferably 2 to 5% by weight of at least one chain extender having a functionality of about 2 and a molecular weight of about 60 to about 250.

Suitable high molecular polyether polyols used as component (a) of the isocyanate-reactive component herein typically have a molecular weight of at least about 1,500, and preferably at least about 2,000. The high molecular weight polyether polyols for component (a) also typically have a molecular weight of less than or equal to about 8,000, and preferably of less than or equal to about 6,000. In addition, the high molecular weight polyether polyol may also have molecular weight ranging between any combination of these upper and lower values, inclusive, e.g. from 1,500 to 8,000, and preferably from 2,000 to 6,000.

The functionality of the high molecular weight polyether polyol is typically at least about 1.8, and preferably at least about 2.0. The functionality of the high molecular weight polyether polyol is also typically less than or equal to about 3.5, and preferably less than or equal to about 3.0. In addition, the high molecular weight polyether polyol may have a functionality ranging between any combination of these upper and lower values, inclusive, e.g. from about 1.8 to about 3.5, and preferably from about 2.0 to about 3.0.

Suitable polyether polyols for component (a) include both conventional polyether polyols which are KOH catalyzed and inherently contain a certain amount of unsaturation, and those polyether polyols which are low unsaturation polyether polyols. The low unsaturation polyether polyols are typically DMC catalyzed.

The KOH catalyzed polyether polyols suitable herein are known in the art and may be prepared by the reaction of one or more suitable starting compounds which contain reactive hydrogen atoms with alkylene oxides such as, for example, ethylene oxide, propylene oxide, butylene oxide, styrene oxide, tetrahydrofuran, epichlorohydrin, and mixtures thereof. Suitable starting compounds containing reactive hydrogen atoms include compounds such as, for example, ethylene glycol, propylene glycol, butylene glycol, hexanediol, octanediol, neopentyl glycol, cyclohexandimethanol, 2-methyl-1,3-propanediol, 2,2,4-trimethyl-1,3-pentanediol, triethylene glycol, tetraethylene glycol, polyethylene glycol, dipropylene glycol, polypropylene glycol, dibutylene glycol, polybutylene glycol, glycerine, trimethylolpropane, pentaerythritol, water, methanol, ethanol, 1,2,6-hexane triol,1,2,4-butane triol, trimethylol ethane, mannitol, sorbitol, methyl glycoside, sucrose, phenol, resorcinol, hydroquinone, 1,1,1- or 1,1,2-tris-(hydroxyphenyl)-ethane, etc.

The low unsaturation polyether polyols which are suitable for component (a) of the present invention have a maximum amount of 0.01 meq/g of unsaturation, preferably no more than 0.007 meq/g unsaturation. These low unsaturation polyether polyols are known and described in, for example, U.S. Patents 5,106,874, 5,576,382, 5,648,447, 5,670,601, 5,677,413, 5,728,745, 5,849,944 and 5,965,778, the disclosures of which are herein incorporated by reference.

Suitable compounds to be used as crosslinking agents, i.e. component (b) of the isocyanate-reactive component herein, typically has a molecular weight of at least about 200, and preferably at least about 300. Suitable crosslinking agents for component (b) also typically have a molecular weight of less than about 1,500, and preferably of less than or equal to about 1,000. In addition, the crosslinking agent may also have molecular weight ranging between any combination of these upper and lower values, inclusive (unless otherwise noted), e.g. from 200 to less than 1,500, and preferably from 300 to 1,000.

The functionality of the crosslinking agent is typically at least about 2.5, and preferably at least about 3.0. The functionality of the crosslinking agent is also typically less than or equal to about 8, and preferably less than or equal to about 6.0. In addition, the crosslinking agent may have a functionality ranging between any combination of these upper and lower values, inclusive, e.g. from about 2.5 to about 8.0, and preferably from about 3.0 to about 6.0.

Examples of suitable compounds to be used as crosslinking agents in accordance with the present invention include, for example, compounds such as diols, triols, polyols, diamines, triamines, etc, and mixtures thereof, and the various alkoxylation products thereof, etc. provided that the above described molecular weight and/or functionality ranges are satisfied. Specifically, the various ethylene oxide adducts and/or propylene oxide adducts based on these compounds are preferred, provided that the molecular weight of the adduct satisfies the above requirements with respect to molecular weight. Suitable diols, triols, and polyols, etc. to be used as possible starters include, for example, 2-methyl-1,3-propanediol, ethylene glycol, 1,2- and 1,3-propanediol, 1,3-and 1,4- and 2,3-butanediol, 1,6-hexanediol, 1,10-decanediol, diethylene glycol, triethylene glycol, tetraethylene glycol, dipropylene glycol, tripropylene glycol, glycerol, trimethylolpropane, trimethylolethane, neopentyl glycol, cyclohexanedimethanol, 2,2,4-trimethylpentane-1,3-diol, pentaerythritol, dipentaerythritol, glucose, sucrose, sorbitol, lactose, mannitol, fructose, hydrolyzed starches, saccharide and polysaccharide derivatives such as alpha-methylglucoside and alpha-hydroxyethylglycoside, etc. Suitable diamines and triamines include but are not limited to ethylene diamine, toluene diamine, diethylenetriamine, ammonia, aminoalcohols which can be prepared by the alkoxylation of ammonia, 2,4'-, 2,2'- and 4,4'-methylene dianiline, 2,6- and/or 2,4-toluene diamine and vicinal toluene diamines, p-aminoaniline, 1,5-diaminonaphthalene, mixtures of methylene dianiline and its higher homologs, ethylene diamine, propylene diamine, diethylene triamine, 1,3-diaminopropane, 1,3-diaminobutane and 1,4-diaminobutane. Ethylene diamine and toluene diamines are particularly preferred. Preferred polyols to be used as starters include, for example, trimethylolpropane, glycerine, sucrose, sorbitol, as well as propylene oxide adducts and ethylene oxide/propylene oxide adducts of these compounds.

A particularly preferred class of compound to be used as crosslinking agents in accordance with the present invention have a molecular weight of about 350 to 500, a functionality of about 4, and OH numbers of about 450 to 650, and comprise the propoxylation adducts of ethylene diamine.

Another particularly preferred class of compounds to be used as crosslinking compounds are the propoxylation adducts of sucrose or mixtures of sucrose and water with molecular weights 450 to 1000, functionalities of 3 to 6, and OH numbers of about 330 to 380.

Suitable compounds to be used as chain extenders, i.e. component (c) of the isocyanate-reactive component herein, typically have a molecular weight of at least about 60, and preferably at least about 100. Suitable chain extending agents for component (c) also typically have a molecular weight of less than or equal to about 250, and preferably of less than or equal to about 200. In addition, the chain extenders may also have molecular weight ranging between any combination of these upper and lower values, inclusive (unless otherwise noted), e.g. from 60 to about 250, and preferably from 100 to 200.

In accordance with the present invention, suitable chain extenders to be used as component (c) typically have a functionality of about 2. Suitable chain extenders may contain hydroxyl groups, amine groups or a one hydroxyl group and one amine group (i.e. aminoalcohols). In accordance with the present invention, it is particularly preferred to use chain extenders containing amine groups. In the case where diols are utilized as chain extenders, they are always used in combination with diamines or aminoalcohols.

Suitable compounds to be used as chain extenders, i.e. component (c), in accordance with the present invention include, for example, ethylene glycol, 1,2- and 1,3-propanediol, 1,3- and 1,4- and 2,3-butanediol, 1,6-hexanediol, 1,10-decanediol, diethylene glycol, triethylene glycol, tetraethylene glycol, dipropylene glycol, tripropylene glycol, glycerol, trimethylolpropane, neopentyl glycol, cyclohexanedimethanol, 2-methyl-1,3-propanediol, and 2,2,4-trimethylpentane-1,3- diol.

Suitable amine compounds to be used as component (c) according to the invention include organic primary amines, secondary amines, and amino alcohols. Some examples of these compounds include 2-methyl-1,5-pentane diamine, diethanolamine, monoethanolamine, ethylene diamine (EDA), 1,3-diaminopropane, 1,4-diaminobutane, isophoronediamine (IPDA), ethanolamine, aminoethylethanolamine, diaminocyclohexane, hexamethylenediamine, methyliminobispropylamine, iminobispropylamine, bis(aminopropyl)piperazine, aminoethyl piperazine, 1,2-diaminocyclo-hexane, bis-(p-aminocyclohexyl)methane, mixtures thereof, and the like.

Other suitable amines include, for example, 1,3,3-trimethyl-1-aminomethyl-5-aminocyclohexane (IPDA), 1,8-p-diaminomenthane, bis(4-aminocyclohexyl)methane, bis(4-amino-3-methylcyclohexyl)-methane, bis(4-amino-3,5-dimethylcyclohexyl)methane, bis(4-amino-2,3,5-trimethylcyclohexyl)methane, 1,1-bis(4-aminocyclohexyl)propane, 2,2-(bis(4-aminocyclohexyl)propane, 1,1-bis(4-aminocyclohexyl)ethane, 1,1-bis(4-aminocyclohexyl)butane, 2,2-bis(4-aminocyclohexyl)butane, 1,1-bis(4-amino-3-methylcyclohexyl)ethane, 2,2-bis(4-amino-3-methylcyclohexyl)propane, 1,1-bis(4-amino-3,5-dimethylcyclohexyl)ethane, 2,2-bis(4-amino-3,5-dimethylcyclohexyl)propane, 2,2-bis(4-amino-3,5-dimethylcyclohexyl)butane, 2,4-diaminodicyclohexylmethane, 4-aminocyclohexyl-4-amino-3-methylcyclohexylmethane, 4-amino-3,5-dimethylcyclohexyl-4-amino-3-methylcyclohexylmethane, and 2-(4-aminocyclohexyl)-2-(4-amino-3-methylcyclohexyl)methane.

Also suitable are aromatic diamines such as, for example, 1,4-diaminobenzene, 1,3-bis(aminomethyl)benzene (MXDA), 2,4- and/or 2,6-diaminotoluene, 2,4'- and/or 4,4'-iaminodiphenylmethane, 3,3'-dimethyl-4,4'-diaminodiphenylmethane, 3,3'-dichloro-4,4'-diaminodiphenylmethane (MOCA), 1-methyl-3,5-bis(methylthio)-2,4-and/or 2,6-diaminobenzene, 1-methyl-3,5-diethyl-2,4-diaminobenzene and/or 1-methyl-3,5-diethyl-2,6-diaminobenzene (i.e. DETDA), 1,3,5-trimethyl-2,4-diaminobenzene, 1,3,5-triethyl-2,4-diaminobenzene, 1,3,5-triisopropyl-2,4-diaminobenzene, 3,5,3',5'-tetraethyl-4,4'-diamino diphenylmethane, 3,5,3',5'-tetraisopropyl-4,4'-diamino diphenylmethane, 3,5-diethyl-3',5'-diisopropyl-4,4'-diamino diphenylmethane, 3,5-diethyl-5,5'-diisopropyl-4,4'-diamino diphenylmethane, 1-methyl-2,6-diamino-3-isopropylbenzene, 3,5-dithiomethyl-2,4-diamino toluene (i.e. ETHACURE 300); 4,6-dimethyl-2-ethyl-1,3-diaminobenzene; 3,5,3',5'-tetraethyl-4,4-diaminodiphenyl-methane; 3,5,3',5'-tetraisopropyl-4,4'-diaminodiphenylmethane; 3,5-diethyl-3',5'-diisopropyl-4,4'-diaminodiphenylmethane; 2,4,6-triethyl-m-phenylenediamine (TEMPDA); 3,5-diisopropyl-2,4-diaminotoluene; 3,5-di-sec-butyl-2,6-diaminotoluene; 3-ethyl-5-isopropyl-2,4-diaminotoluene; 4,6-diisopropyl-m-phenylenediamine; 4,6-di-tert-butyl-m-phenylenediamine; 4,6-diethyl-m-phenylenediamine; 3-isopropyl-2,6-diaminotoluene; 5-isopropyl-2,4-diaminotoluene; 4-isopropyl-6-methyl-m-phenylenediamine; 4-isopropyl-6-tert-butyl-m-phenylenediamine; 4-ethyl-6-isopropyl-m-phenylenediamine; 4-methyl-6-tert-butyl-m-phenylenediamine; 4,6-di-sec-butyl-m-phenylenediamine; 4-ethyl-6-tert-butyl-m-phenylene-diamine; 4-ethyl-6-sec-butyl-m-phenylenediamine; 4-ethyl-6-isobutyl-m-phenylene-diamine; 4-isopropyl-6-isobutyl-m-phenylenediamine; 4-isopropyl-6-sec-butyl-m-phenylenediamine; 4-tert-butyl-6-isobutyl-m-phenylenediamine; 4-cyclopentyl-6-ethyl-m-phenylenediamine; 4-cyclohexyl-6-isopropyl-m-phenylenediamine; 4,6-dicyclopentyl-m-phenylenediamine. Such diamines may, of course, also be used as mixtures.

In addition, aromatic polyamines may be used in admixture with the sterically hindered chain extenders and include, for example, 2,4- and 2,6-diamino toluene, 2,4'- and/or 4,4'-diaminodiphenylmethane, 1,2- and 1,4-phenylene diamine, naphthalene-1,5-diamine and triphenyl-methane-4,4',4"-triamine. The difunctional and polyfunctional aromatic amine compounds may also exclusively or partly contain secondary amino groups such as 4,4'-di-(methylamino)-diphenylmethane or 1-methyl-2-methylamino-4-amino-benzene.

Preferred chain extenders are ethylene diamine (EDA), 1,3-bis(aminomethyl)benzene (MXDA), 1,3,3-trimethyl-1-aminomethyl-5-aminocyclohexane (IPDA), and various isomers of and isomeric mixtures of diethyltoluenediamine (DETDA). A preferred isomeric mixture comprises 75 to 81 % by wt. of the 2,4-isomer of diethyltoluene diamine and 21 to 25% by wt. of the 2,6-isomer of diethyltoluenediamine. A particularly preferred compound to be used as (c) herein is IPDA.

Diamines are an integral part of the current invention. Besides their positive contribution to the physical properties, e.g., increased hardness and flexural modulus, of the polyurethaneureas, they act as viscosity modifiers that serve to assure that the polyurethaneureas remain where they are applied onto the gelcoat surface. It avoids that the polyurethaneureas run off vertical surfaces to which they are applied by rapidly increasing the mix viscosity of the reacting polyurethaneurea without increasing the viscosity of the individual components 1) or 2) prior to mixing.

Catalysts can also be used in this invention, however, it is desireable that they catalyze the through cure of the reacting polyurethaneurea mass instead of the initial cure. Suitable catalysts that can be used are bismuth-containing catalysts such as COSCAT 84 available from Cosan Chemical Co., tertiary amines, such as triethylamine, dimethylethanolamine, triethylene diamine (DABCO), as well as organometallic catalysts such as stannous octate, dibutyltin dilaurate, dibutyltin mercaptide and the like. Other suitable catalysts are disclosed in U.S. Patent 5,233,009, the disclosure of which is hereby incorporated by reference. Preferably, the catalyst is an acid blocked version of triethylene diamine. These catalysts are referred to as delayed action to those skilled in the art. Suitable versions of this type delayed action catalysts are available from Air Products under the tradename Dabco®.

One or more additives to absorb moisture can be included in the polyol component (or the isocyanate component). A particularly suitable such additive is molecular sieve, e.g., a synthetic zeolite, which is typically added to the polyol component as a mixture with castor oil (1:1 weight ratio). One such material is available under the tradename BAYLITH-L-PASTE from Bayer. Other suitable drying agents include natural zeolite having a particle size of not greater than about 5 microns and a pore size of about 2.5 to 4.5 Angstroms. Preferably, about 2 to 20 parts by weight of a drying agent are used, and more preferably about 5 to 10 parts by weight, per 100 parts by weight of the isocyanate-reactive component.

Other additives can be included in the isocyanate-reactive component (or the isocyanate component, although this is not preferred). For example, antifoaming agents typically used in polyurethane compositions, such as polysiloxane antifoaming agents, can be used to decrease the amount of foaming. Antifoaming agents can be used either individually or in admixture. Typically, no more than about 0.2 to 0.5 parts by weight of an antifoaming agent, based on 100 parts by weight of the isocyanate-reactive component.

Other additives that can be used in either the isocyanate-reactive component (or the isocyanate component, although this is not desired) include, for example, emulsifiers, surface-active stabilizers, pigments, dyes, UV-stabilizers, plasticizers, flame-retardents, fungicides, and bacteriocides.

The polyurethaneurea layer of the invention may additionally comprise (e) one or more fillers. Suitable fillers are present in amounts of from 0 to 50, preferably 10 to 40 and more preferably 15 to 35% by weight, based on 100% by weight of the filled polyurethaneurea.

Typically and preferably, a filler material is added just prior to the time when the isocyanate component and the polyol component are combined. The filler material is normally added to the isocyanate reactive component prior to combining it with the isocyanate component. The filler material should be relatively dry. Preferably, it should have less than about 2% moisture content, and more preferably less than about 0.05% moisture content. Suitable fillers to be used as component (e) in accordance with the present invention includes inorganic compounds such as, for example, compounds such as glass in the form of flakes, cut fibers, or microspheres; ceramic microspheres, mica, wollastonite; muscovite mica; carbon fibers; carbon black; talc; and calcium carbonate. Suitable organic compounds include, for example, organic fibers (such as polyamide fibers), expanded microspheres which are known and described in, for example, U.S. Patents 4,829,094, 4,843,104, 4,902,722 and 5,244,613, the disclosures of which are herein incorporated by reference. These include commercially available microspheres such as, for example, Dualite M6017AE, Dualite M6001AE and Dualite M6029AE, all of which are available from Pierce and Stevens Corporation, and Expandocel which is available from Nobel Industries. Useful fillers also included materials such as, for example, alumina trihydrate, recycled calcium carbonate, recycled alumina trihydrate, fly ash, recycled tire crumb, barium sulfate, silica, silica flour, barytes, ceramic spheres and fibers, boron, graphite, wollastonite, kieselguhr, fillers providing color like carbon black and titanium dioxide, and the like. Such fillers can be used to improve thermal conductivity, electrical conductivity, tensile strength, flexural modulus, color, etc. They can be used in the form of fibers, spheres, platelets, powders, pellets, etc. Preferred fillers are substantially inert under the conditions encountered when the components of the invention are mixed. Fillers can be used either individually or in admixture. Preferred fillers are mica and talc.

The polyurethaneurea layers of the present invention may additionally comprise (d) glass fibers. In accordance with the present invention, glass fibers are typically present in an amount of at least 2% by weight, preferably at least 5% by weight and more preferably at least 7% by weight. The glass fibers are also typically present in the polyurethaneurea layers in amounts of less than or equal to 25% by weight, preferably less than or equal to 20% by weight, and preferably less than or equal to 16% by weight. The glass fibers may be present in the polyurethaneurea layers in amounts ranging between any combination of these upper and lower values, inclusive, e.g. from 2% to 25% by weight, preferably from 5% to 20% by weight, and more preferably from 7% to 16% by weight. The % by weight of the glass fibers is based 100% by weight of the polyurethaneurea layer and glass fibers present (i.e. 100% by weight of the sum of the weight of the polyurethaneurea layer and of the weight of the glass fibers.

The glass is usually introduced into the polyurethane in a continuous operation whereby continuous strands of the glass are chopped into a stream of the polyurethaneurea as it is applied onto the gel coat surface. The glass is typically chopped into ¼ to 1½ inch lengths. Longer lengths provide better impact resistance of the polyurethaneurea layers whereas shorter lengths provide smoother surfaces. Shorter lengths are preferred for the current invention.

In order to maintain the smoothest interface between the polyurethaneurea and gelcoat according to the current invention, the glass is preferably not immediately introduced with the polyurethaneurea layer, but rather delayed until a thin coat of polyurethaneurea alone is applied onto the gelcoat surface. Glass is introduced in subsequent passes so that the polyurethaneurea layer contains 2 to 25% glass fibers. In another embodiment, the polyurethane urea can be applied in two layers; the first of which contains no glass fibers and the second containing them in an amount such that the combined two layers contain from 2 to 25% glass fibers.

In the processes of forming composites using the above described spray polyurethaneurea compositions, can be in accordance with the processes as described in, for example, U.S. Patents 5,614,575, and 6,294,248, the disclosures of which are herein incorporated by reference. Suitable information in terms of relevant processes and the corresponding steps for each process, suitable conditions, suitable molds, demold times, end uses, etc. are set forth in these references. Obviously, the spray elastomer compositions described hereinabove are substituted for the specific elastomer compositions of these references.

In accordance with the present invention, the polyurethaneurea layer will typically have an NCO Index of from about 0.90 to about 1.20, and preferably from about 0.95 to about 1.05.

Suitable unsaturated polyester resin layers to be used as component (C) of the present invention include, for example, are essentially of the same composition as those previously described as being useful for the gel coat. The most obvious differences are that the resins used for these layers are typically not pigmented and contain slightly less reactive diluent. They also often contain fillers as listed above as fillers in the polyurethaneurea layer. In general, unsaturated polyesters are prepared from dicarboxylic functional monomers, or mixture a di- or greater carboxyl functional monomers, at least one of which contains ethylenic unsaturation. These polyesters are obtained by the condensation of the carboxylic acid monomers with polyhydric alcohols, commercially the polyester is dissolved in a monomer such as, for example, styrene, to obtain a solution that may then be crosslinked. Additional details concerning the composition of the unsaturated polyester resins useful as component C) herein can be found in, for example, U.S. 6,107,446, the disclosure of which is hereby incorporated by reference.

In addition, the unsaturated polyester resin layer (C) typically contains chopped glass fibers and woven or non-woven glass mats, glass flakes, etc. The glass fibers may be added to the unsaturated polyester resin layer (C) at any point, i.e. they may be added immediately prior to applying the polyester resin on top of the polyurethaneurea layer or they can be pre-mixed into the polyester resin. Typically, the fibers are chopped into the sprayed resin stream in a similar manner as in the polyurethaneurea layer. Due to the high amounts of fibers that are more preferred, the fibers are typically hand rolled into the resin to assure that they are completely incorporated into this layer. The glass fibers are typically present in an amount of at least 15% by weight, preferably at least 25% by weight and more preferably at least 30% by weight, based on the weight of the unsaturated polyester resin (C). The glass fibers are also typically present in the unsaturated polyester layers in amounts of less than or equal to 50% by weight, preferably less than or equal to 40% by weight, and preferably less than or equal to 35% by weight, based on the weight of the unsaturated polyester resin solution (C). The unsaturated polyester resin is also typically diluted with styrene and/or other reactive diluents. The glass fibers may be present in the polyurethaneurea layers in amounts ranging between any combination of these upper and lower values, inclusive, e.g. part from 15% to 50% by weight, preferably from 25% to 40% by weight, and more preferably from 30% to 35% by weight, based on the weight of the unsaturated polyester resin (C).

In accordance with the present invention, the process for producing the composites herein comprises (I) applying (A) an unsaturated polyester gel coat to a suitable substrate; (II) spraying (B) at least one layer of a polyurethaneurea onto the gel coat formed in (I), and (III) applying (C) an unsaturated polyester resin which contains chopped glass fibers onto the polyurethaneurea layer formed in (II). Suitable components for each layer are as described hereinabove.

Suitable methods of applying layer (A) include, for example, spraying, brushing and/or pouring. It is preferred that the unsaturated polyester resin which forms layer (A) herein is applied by spraying. The unsaturated polyester resin which forms layer (C) is also most frequently applied by spraying, but in some areas, especially where glass mat is used, the resin can be applied with a paint brush or poured onto the part and then compacted into the part by hand rolling. The polyurethaneurea layer is sprayed on.

In accordance with the present invention, the composites typically comprise at least 1 layer of (A) the unsaturated polyester gel coat, and possibly 2 layers of (A) the gel coat. The composites of the present invention also contain at least 1, and preferably at least 2 layers of (B) the polyurethaneurea component. In addition, the composites contain no more than about 4 layers of (B) the polyurethaneurea component. Composites of the present invention may contain a number of layers ranging between any combination of these upper and lower values, inclusive, e.g. from 1 to 4 layers, and preferably from 2 to 4 layers. The composites additionally comprise at least 1 layer of (C) the unsaturated polyester resin and no more than about 8 layers of the unsaturated polyester resin. Thus, in accordance with the present invention, these composites comprise from 1 to 2 layers of unsaturated polyester gel coat, from 1 to 4 layers of polyurethaneurea, and from 1 to 8 layers of unsaturated polyester resin.

The total thickness of all layers of the gel coats are at least about 2 mils, preferably at least about 10 mils, and most preferably about at least 20 mils thick. All layers of the gel coat also typically have a total thickness of less than or equal to 50, preferably less than or equal to 40, and most preferably less than or equal to 30 mils thick. In addition, the total thickness of all of the layers of the polyester gel coat may range between any combination of these upper and lower values, inclusive, e.g. from about 1 to about 50, preferably from about 10 to about 40 and most preferably from about 20 to about 40 mils thick.

The total thickness of all layers of the polyurethane skin coats are at least about 10, preferably at least about 20 and most preferably at least about 30 mils thick. All layers of the polyurethane skin coat also typically have a total thickness of less than or equal to 120, preferably less than or equal to 80, and most preferably less than or equal to 60 mils thick. In addition, the total thickness of all of the layers of the polyurethane skin coat may range between any combination of these upper and lower values, inclusive, e.g. from about 10 to about 120, preferably from about 20 to about 80 and most preferably from about 30 to about 60 mils thick.

The unsaturated polyester (C) can be several (i.e. from 1 to 8) layers, and contain glass fibers, woven and/or non-woven glass and/or carbon fiber mats. Typically, the total thickness of all layers of the unsaturated polyester are at least about 20 mils, preferably at least about 40 mils, and most preferably at least about 60 mils thick. The total thickness of all layers of the unsaturated polyester are also typically less than or equal to 500 mils, preferably less than or equal to 300 mils and most preferably less than or equal to 200 mils. In addition, the total thickness of these final layers of unsaturated polyester may range between any combination of these upper and lower values, inclusive, e.g. from about 20 to 500 mils, preferably from about 40 to 300 mils, most preferably from about 60 to 200 mils thick, and contains glass fibers, woven and/or non-woven glass and/or carbon fiber mats.

In accordance with the present invention, the composites are produced in molds at a temperature ranging between 15° C and about 100°C, and preferably about room temperature. It is preferred that the mold temperature is less than about 80°C.

When preparing the composites of the present invention, it is preferred to apply the layers of the same component (i.e. gel coat, polyurethaneurea or unsaturated polyester resin) as quickly as possible. By applying the layers of the same component as quickly as possible, the overall manufacturing time is as short as possible. In addition, the maximum time between applying layers of the same component should not exceed about 4 hours. Times greater than 4 hours may result in problems with intercoat adhesion of the individual layers of each component.

Once the gel coat is applied to the mold, it must be allowed to cure sufficiently to ensure proper adhesion between the gel coat layers and the polyurethaneurea layers. More specifically, the last layer of gel coat should be allowed to almost completely cure so that no more styrene volatilizes and forms a vapor between the last layer of the gel coat and the first layer of the polyurethaneurea. The exact amount of time will be dependent on the specific catalyst or catalyst package used in the unsaturated polyester which forms the gel coat of the composites herein. Different catalysts give different reaction rates and require different temperatures to be activated. Thus, it is possible to change catalysts and/or increase the quantity of catalyst used to decrease the cure time of the unsaturated polyester forming the gel coat. Ideally, the catalyst selected and the amount of catalyst used should be such that the unsaturated polyester which forms one layer of gel coat requires at least about 10 and no more than about 60 minutes to cure. What is critical in preparing composites of the present invention, is the amount of time between applying the gel coat and applying the PUR layer. To assure the best adhesion, the amount of time should be sufficient to allow gel coat to almost completely cure so that no more styrene volatilizes and forms a vapor between the two layers. Time wise, this is very dependent on the catalysis. One can add more catalyst or increase temperature to get quicker cure. Ideally, the time varies between 10 and 60 minutes for each layer.

As used herein, unless other noted and/or specified, the term molecular weight refers to the number average molecular weight (Mₙ) and and is determined by end group analysis (OH number).

The following examples further illustrate details for the preparation and use of the compositions of this invention. The invention, which is set forth in the foregoing disclosure, is not to be limited either in spirit or scope by these examples. Those skilled in the art will readily understand that known variations of the conditions and processes of the following preparative procedures can be used to prepare these compositions. Unless otherwise noted, all temperatures are degrees Celsius and all parts and percentages are parts by weight and percentages by weight, respectively.

### EXAMPLES

The following components were used in the working examples.
- Polyester Gel Coat:: Amorcote ®HP 30 White, commercially available under this name from Cook Composites, North Kansas City, MO.
- Isocyanate A:: A mixture of 30.8 parts 4,4'-MDI, 26.4 polymeric MDI, and 42.8 parts of a 55/45 mixture of 2,4'-MDI/4,4'-MDI was heated to 60°C under stirring. To the stirred mixture was added 12.8 parts of a polyether based on glycerine and propylene oxide (OH# 470) slowly such that the temperature did not exceed 80°C. The mixture was allowed to react at that temperature for two hours. The resultant prepolymer had an NCO group content of about 25.2% by weight and a viscosity of 900 mPa·s
- Polyol A:: a polyether polyol prepared by alkoxylating glycerine with a mixture of propylene oxide and ethylene oxide in a weight ratio of 87:13, with the resultant polyether polyol having an actual functionality of about 2.22 and an OH number of about 28.
- Polyol B:: a polyether polyol prepared by alkoxylating glycerin with a ethylene oxide and propylene oxide in a weight ratio of about 20:80, with the resultant polyether polyol having a maximum unsaturation of 0.04 meq/g, an actual functionality of about 2.7 and an OH number of about 36.
- Crosslinker A:: a crosslinking agent prepared by propoxylating a starter mixture comprising sucrose, propylene glycol and water, with the resultant crosslinking agent having an actual functionality of about 2.98 and an OH number of about 380.
- Crosslinker B:: a crosslinking agent prepared by propoxylating ethylene diamine as a starter, with the resultant crosslinking agent having an actual functionality of about 4 and an OH number of about 630.
- Extender A:: 3-aminomethyl-3,5,5,-trimethylcyclohexylamine (IPDA) which has an actual functionality of 2 and an molecular weight of 170.
- Catalyst A:: a catalyst comprising 33% by wt. of triethylene diamine in 67% by wt. of dipropylene glycol, an amine catalyst, commercially available as Dabco® 33LV from Air Products and Chemicals Inc.
- Catalyst B:: a catalyst comprising a blocked amine in ethylene glycol which has an OH number of about, commercially available as Dabco® 1028 from Air Products and Chemicals Inc.
- Silverline® 202:: talc (commercially available from Luzenac America, Inc., Centennial, CO)
- Baylith L:: a zeolite (drying agent), commercially available from Lanxess
- Polyester Resin A:: Stypol® LSPF 2522 (commercially available from Cook Composites, North Kansas City, MO)

In accordance with the present invention, a polyurethaneurea layer which was used in Example 1 was prepared from various components using the following formulation:

**Table 1: Polyurethaneurea**

| Component | Parts by weight |
|---|---|
| Polyol A | 1.75 |
| Polyol B | 4.00 |
| Crosslinker A | 34.30 |
| Crosslinker B | 5,75 |
| Extender A | 2.00 |
| Catalyst A | 0.15 |
| Catalyst B | 0.10 |
| Silverline® 202 | 50.00 |
| Baylith L | 1.95 |
| | |
| Isocyanate A | 56.50 |
| | |
| Isocyanate Index | 105 |

The following procedure was used to prepare the sample composites tested in the examples.

In each of the examples herein, a 24" x 24" polished steel photographic plate coated with a thin layer of carnuba was used for the polyester gel coat. The plate was at room temperature.

### Example 1:

First, 2 phr Catalyst 730 (a commercially available peroxide catalyst from Atofina in Philidelphia, PA) were added to the Amorcote ® HP 30 White. Using this mixture, a single layer polyester gel coat was prepared by spraying the mixture to a wet film thickness of 18 mils. This was allowed to cure for 30 minutes.

On top of the cured gel coat, was sprayed an initial layer of polyurethaneurea of about 30 mils wet film thickness containing no glass, followed immediately thereafter with a second layer of polyurethaneurea of about 60 mils wet film thickness containing chopped glass, followed immediately thereafter with a third layer of polyurethaneurea of about 30 mils wet film thickness containing no glass such that the total film wet thickness of polyurethaneurea layer was about 120 mils and the concentration of glass fibers was about 7 % by weight based on the combined weight of the polyurethaneurea and filler. The chopped glass fibers were Hybon® 6055 simultaneously chopped ½ inch long into the polyurethaneurea spray as it was applied. (This glass is commercially available under the tradename Hybon® 6055 from PPG Industries, Pittsburgh, PA.) After 40 minutes, a layer of unsaturated polyester comprised of 33 parts glass mat (1 ½ oz./ft.² non-woven) and 67 parts unsaturated polyester resin was hand rolled on top of the polyurethaneurea layer to a wet film thickness of 60 mil. An additional layer of identical composition was applied by hand rolling 40 minutes later.

The last two layers comprised Polyester Resin A (i.e. Stypol ® LSPF 2522, commercially available from Cook Composites, North Kansas City, MO) as described above into which, 2 phr Luperox DHD-9 (a commercially available catalyst from Atofina, Philadelphia, PA) was mixed before being applied on top of the polyurethaneurea layer and allowed to cure. Thus, Example 1 comprised the following layers of components:
(A) a single layer (18 mil thickness) of Polyester Gel Coat (i.e. Amorcote ® HP 30 White catalyzed with Catalyst 730 (a commercially available peroxide catalyst from Atofina in Philidelphia, PA)),
(B) three layers (120 mil total thickness) of polyurethaneurea from Table 1 which contained 7% by weight of chopped glass fibers, Hybon® 6055
   and
C) two layers (120 mil total thickness) of Polyester Resin A (i.e. Stypol ® LSPF 2522 catalyzed with Luperox DHD-9 (a commercially available catalyst from Atofina, Philadelphia, PA), which comprised 33% by weight glass mat (based on 100% by weight of glass mat and polyester resin)
The Control was prepared using the similar procedure as described above for the example.

The control was prepared by applying a single layer of the Polyester Gel Coat, and then applying four layers of Polyester Resin A (each 60 mils thick, for a total thickness of 240 mils) instead of the three layers of polyurethaneurea. These layers of Polyester Resin A also comprised 33% by weight glass mat (based on 100% by weight of glass mat and polyester resin).

The values given in Table 2 below are the average of three samples.

| Table 2: | | | |
|---|---|---|---|
| **Physical Test Result Averages** | | | |
| **Test Details** | **Units** | **Control** | **Example 1 (NB#894644)** |
| Charpy Impact--impact strength | ft·lbf/in² | 16.5 | 25.4 |
| ASTM D 3763 High Speed Punct 23C-En. Total FT_LBS--total energy | ft·lbf | 16.44 | 23.34 |
| ASTM D 3763 High Speed Punct 23C-En.@ Peak LBS--energy at peak | ft·lbf | 7.4 | 14.88 |
| ASTM D 3763 High Speed Punct 23C-En.@Crack FT_LBS--energy at crack | ft·Ibf | 3.06 | 5.66 |
| ASTM D 3763 High Speed Punct 23C-Load Total LBS--total load | lb | 429 | 864.8 |
| ASTM D 3763 High Speed Punct 23C-Load@ Peak LBS--load at peak | lb | 835.8 | 1391 |
| ASTM D 3763 High Speed Punct 23C-Load@Crack LBS--load at crack | lb | 679.2 | 1143 |
| ASTM D 3763 High Speed Punct 23C-Thk. in Inch--thickness | in | 0.251 | 0.293 |
| ASTM D 3763 High Speed Punct 23C-Velocity MPH--velocity | mph | 5 | 5 |
| ASTM D695J(1) COMPRESSIVE PROPERTIES OF COMPOSITE PLASTICS--compressive strength | psi | 15283.2 | 12083 |
| ASTM D695J(1) COMPRESSIVE PROPERTIES OF COMPOSITE PLASTICS--ultimate load | Ib | 1856.8 | 1717.667 |
| FLX790(1) ASTM D 790 Method I Flexural Properties of Plastic--flexural modulus | psi | 857782 | 717700 |
| ASTM D 790 Method I Flexural Properties of Plastic--flexural strain | % | 2.216 | 3.56 |
| ASTM D 790 Method I Flexural Properties of Plastic--flexural strength | psi | 15849.6 | 18250 |
| ASTM D 790 Method I Flexural Properties of Plastic--flexural strength at 5% deflection | % | | |
| ASTM D 648 Deflection Temperature of Plastics--load | psi | 264 | 264 |
| ASTM D 648 Deflection Temperature of Plastics--temperature to deflect 0.010 inch | °C | 67.3 | 60.8 |
| ASTM D 638 Tensile Properties of Plastics--elongation at yield | % | 2.34 | 3.42 |
| ASTM D 638 Tensile Properties of Plastics--tensile strength at break | psi | 3272.8 | 3389 |
| ASTM D 638 Tensile Properties of Plastics--tensile strength at yield | psi | 4125 | 5016 |
| ASTM D 638 Tensile Properties of Plastics--ultimate elongation | % | 2.48 | 3.68 |
| ASTM D 638 Tensile Properties of Plastics--ultimate tensile strength | psi | 3272.8 | 3389 |
| Water Absorption of Plastics, 24 Hours--increase in weight | % | 0.263 | 0.195 |
| WATAB7(1) Water Absorption of Plastics, 168 Hours--increase in weight | % | 0.457 | 0.455 |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A composite article comprising:
(A) an unsaturated polyester gel coat;
(B) at least one sprayable polyurethaneurea layer in which the polyurethaneurea comprises the reaction product of
(1) at least one polyisocyanate component
with
(2) an isocyanate-reactive component comprising:
(a) no more than 20% by weight of at least one high molecular weight polyether polyol having a functionality of 1.8 to 3.5, a molecular weight of 1,500 to 8,000;
(b) from about 70 to about 95% by weight of at least one crosslinking agent having a molecular weight of 200 to less than 1,500, a functionality of 2.5 to 8;
and
(c) from about 0.5 to about 10% by weight of at least one chain extender having a functionality of about 2, and a molecular weight of about 60 to about 250;
with the sum of the %'s by weight of (a), (b) and (c) totaling 100% by weight of (2);
and
(C) an unsaturated polyester resin layer containing chopped glass fibers.

2. The composite article of Claim 1, wherein (A) said unsaturated polyester gel coat additionally comprises one or more pigments.

3. The composite article of Claim 1, wherein (B) sprayable polyurethaneurea layer comprises (1) at least one polyisocyanate component comprising an adduct containing urethane groups.

4. The composite article of Claim 1, wherein (B) the sprayable polyurethaneurea layer comprises (1) at least one polyisocyanate component selected from the group consisting of adducts containing carbodiimide groups, adducts containing allophanate groups and mixtures thereof.

5. The composite article of Claim 1, in which (B) the sprayable polyurethaneurea layer comprises (2)(a) at least one polyether polyol having a functionality of 2.0 to 3.0 and a molecular weight of from 2,000 to 6,000.

6. The composite article of Claim 1, wherein the polyether polyol (2)(a) of (B) the sprayable polyurethaneurea layer is selected from the group consisting of low unsaturation polyether polyols, KOH catalyzed polyether polyols and mixtures thereof.

7. The composite article of Claim 1, in which (B) the sprayable polyurethaneurea layer comprises (2)(b) at least one crosslinking agent having a functionality of from 3 to 6 and a molecular weight of from 300 to 1,000.

8. The composite article of Claim 1, in which (B) the sprayable polyurethaneurea layer comprises (2)(b) at least one crosslinking agent which is amine initiated.

9. The composite article of Claim 1, in which (B) the sprayable polyurethaneurea layer comprises (2)(b) a mixture of crosslinking agents comprising:
(1) from 20 to 80% by weight of at least one sucrose initiated crosslinking agent,
and
(2) from 20 to 80% by weight of at least one amine initiated crosslinking agent,
with the sum of (1) and (2) totaling 100% by weight of (2)(b).

10. The composite article of Claim 1, in which the sprayable polyurethaneurea layer comprises (2)(c) at least one chain extender which is selected from the group consisting of diamines, aminoalcohols and mixtures thereof.

11. The composite article of Claim 1, wherein (B) the sprayable polyurethaneurea layer comprises (2) an isocyanate-reactive component comprising:
(a) from 5% to 15% by weight of at least one high molecular weight polyether polyol having a functionality of 1.8 to 3.5, a molecular weight of 1,500 to 8,000;
(b) from about 80% to about 90% by weight of at least one crosslinking agent having a molecular weight of 200 to less than 1,500, a functionality of 2.5 to 8;
and
(c) from about 2% to about 5% by weight of at least one chain extender having a functionality of about 2, and a molecular weight of about 60 to about 250;
with the sum of the %'s by weight of (a), (b) and (c) totaling 100% by weight of (2).

12. The composite article of Claim 1, wherein (B) the sprayable polyurethaneurea layer additionally comprises from about 2 to about 25% by weight of glass fibers, based on 100% by weight of the polyurethaneurea layer and glass fibers.

13. The composite article of Claim 1, wherein (B) the sprayable polyurethaneurea layer additionally comprises one or more fillers.

14. A process for the production of a composite comprising:
(I) applying (A) an unsaturated polyester gel coat to a suitable substrate;
(II) spraying (B) at least one layer of a polyurethaneurea onto the gel coat formed in (I), in which the polyurethane comprises the reaction product of:
(1) at least one polyisocyanate component;
with
(2) an isocyanate-reactive component comprising:
(a) no more than 20% by weight of at least one high molecular weight polyether polyol having a functionality of 1.8 to 3.5, and a molecular weight of 1,500 to 8,000;
(b) from about 70 to about 95% by weight of at least one crosslinking agent having a molecular weight of 200 to less than 1,500, and a functionality of 2.5 to 8;
and
(c) from about 0.5 to 10% by weight of at least one chain extender having a functionality of about 2, a molecular weight of about 60 to about 250;
with the sum of the %'s by weight of (a), (b) and (c)
totaling 100% by weight of (2);
and
(III) applying (C) an unsaturated polyester resin layer containing chopped glass fibers onto the polyurethane layer formed in (II).

15. The process of Claim 14, wherein (A) said unsaturated polyester gel coat additionally comprises one or more pigments.

16. The process of Claim 14, wherein (B) sprayable polyurethaneurea layer comprises (1) at least one polyisocyanate component comprising an adduct containing urethane groups.

17. The process of Claim 14, wherein (B) the sprayable polyurethaneurea layer comprises (1) at least one polyisocyanate component selected from the group consisting of adducts containing carbodiimide groups, adducts containing allophanate groups and mixtures thereof.

18. The process of Claim 14, in which (B) the sprayable polyurethaneurea layer comprises (2)(a) at least one polyether polyol having a functionality of 2.0 to 3.0 and a molecular weight of from 2,000 to 6,000.

19. The process of Claim 14, wherein the polyether polyol (2)(a) of (B) the sprayable polyurethaneurea layer is selected from the group consisting of low unsaturation polyether polyols, KOH catalyzed polyether polyols and mixtures thereof.

20. The process of Claim 14, in which (B) the sprayable polyurethaneurea layer comprises (2)(b) at least one crosslinking agent having a functionality of from 3 to 6 and a molecular weight of from 300 to 1,000.

21. The process of Claim 14, in which (B) the sprayable polyurethaneurea layer comprises (2)(b) at least one crosslinking agent which is amine initiated.

22. The process of Claim 14, in which (B) the sprayable polyurethaneurea layer comprises (2)(b) a mixture of crosslinking agents comprising:
(1) from 20 to 80% by weight of at least one sucrose initiated crosslinking agent,
and
(2) from 20 to 80% by weight of at least one amine initiated crosslinking agent,
with the sum of (1) and (2) totaling 100% by weight of (2)(b).

23. The process of Claim 14, in which the sprayable polyurethaneurea layer comprises (2)(c) at least one chain extender which is selected from the group consisting of diamines, aminoalcohols and mixtures thereof.

24. The process of Claim 14, wherein (B) the sprayable polyurethaneurea layer comprises (2) an isocyanate-reactive component comprising:
(a) from 5% to 15% by weight of at least one high molecular weight polyether polyol having a functionality of 1.8 to 3.5, a molecular weight of 1,500 to 8,000;
(b) from about 80% to about 90% by weight of at least one crosslinking agent having a molecular weight of 200 to less than 1,500, a functionality of 2.5 to 8;
and
(c) from about 2% to about 5% by weight of at least one chain extender having a functionality of about 2, and a molecular weight of about 60 to about 250;
with the sum of the %'s by weight of (a), (b) and (c) totaling 100% by weight of (2).

25. The process of Claim 14, wherein (B) the sprayable polyurethaneurea layer additionally comprises from about 2 to about 25% by weight of glass fibers, based on 100% by weight of the polyurethaneurea layer and glass fibers.

26. The process of Claim 14, wherein (B) the sprayable polyurethaneurea layer additionally comprises one or more fillers.
